(19) **Europäisches Patentamt**

**European Patent Office**    (11) Veröffentlichungsnummer: **0 219 687**
**B1**

**Office européen des brevets**

(12)    **EUROPÄISCHE PATENTSCHRIFT**

---

(45) Veröffentlichungstag der Patentschrift:
30.08.89

(21) Anmeldenummer: **86112806.4**

(22) Anmeldetag: **16.09.86**

(51) Int. Cl.⁴: **H02K 15/12**

---

(54) Vorrichtung zur Formpressung eines Wickelkopfes.

---

(30) Priorität: **30.09.85 DE 3534923**

(43) Veröffentlichungstag der Anmeldung:
**29.04.87 Patentblatt 87/18**

(45) Bekanntmachung des Hinweises auf die Patenterteilung:
**30.08.89 Patentblatt 89/35**

(84) Benannte Vertragsstaaten:
**DE GB SE**

(56) Entgegenhaltungen:
**DE-A- 2 327 150**
**US-A- 1 982 279**
**US-A- 2 019 064**

(73) Patentinhaber: **Siemens Aktiengesellschaft,**
**Wittelsbacherplatz 2, D-8000 München 2(DE)**

(72) Erfinder: **Nitt, Karl-Heinz, An den Mühltannen 12,**
**D-8700 Würzburg(DE)**

---

## Beschreibung

Die Erfindung bezieht sich auf eine Vorrichtung zur Formpressung eines Wickelkopfes gemäß Oberbegriffes des Anspruchs 1; eine derartige Vorrichtung ist durch die DE-A 2 327 150 und DE-U 7 640 891 bekannt.

Bei der bekannten Vorrichtung wird eine einteilige, der gesamten vorgesehenen Wickelkopfkontur entsprechende Formschale axial auf einen Wickelkopf oberhalb der Stirnseite eines Ständerblechpaketes bis zur Anlage der Vorderkante der Formschale an der Stirnseite des Ständerblechpaketes gedrückt; ein derartiger Wickelkopf muß unbedingt bereits bandagiert sein, da andernfalls nicht sämtliche Wicklungsdrähte beschädigungsfrei erfaßt und unter hinreichendem allseitigen Druck zu der gewünschten Wickelkopfkontur mit abgerundeten Stirnkanten zusammengepreßt werden können.

Gemäß Aufgabe vorliegender Erfindung soll daher eine Vorrichtung geschaffen werden, mit der insbesondere die eine volle spätere Betriebssicherheit des Elektromotors gewährleistende Formung eines Wickelkopfes auch dann möglich ist, wenn dessen Spulen lediglich in dem Zustand aus den stirnseitigen Nutenden des Ständerblechpaketes herausragen, wie sie zuvor z.B. maschinell in die Nuten eingewickelt bzw. als lose vorgewickelte Spulen eingelegt und somit durch keine weitere Nachbearbeitung, insbesondere keine zusätzliche Bandagierung, vorgeformt bzw. vorverfestig sind.

Die Lösung dieser Aufgabe gelingt bei einer Vorrichtung der eingangs genannten Art erfindungsgemäß durch die Lehre des Anspruchs 1; vorteilhafte Ausgestaltungen der Erfindung sind jeweils Gegenstand der Unteransprüche.

Mit der erfindungsgemäßen Vorrichtung ist es möglich, zunächst durch das axiale Einschieben des Formkerns und das radiale Zuführen der äußeren Begrenzungs-Formschale die Wickelform bis auf die axiale Öffnung zur Druck-Formschale hin festzulegen; anschließend kann die axiale Druck-Formschale axial gegen den Wickelkopf weitgehend unabhängig von dem Füllfaktor der derart aus Formkern, Begrenzungs-Formschalen und Druck-Formschalen gebildeten Formschalenvorrichtung soweit vorgedrückt werden, bis deren Wicklungsdrähte, vorzugsweise unter Erreichung einer plastischen Verformung, allseitig unter einem hinreichenden Druck stehen, wobei durch die keinen Wicklungsnutzraum beanspruchenden und trotzdem im Sinne einer genügenden Festigkeit ausbildbaren Führungsfinger sämtliche Wicklungsdrähte ohne Gefahr einer Abknickung bei der Zuführung der Druck-Formschale erfaßbar sind.

Um auch in den Fällen, in denen z.B. bei einer in zwei Etagen gewickelten Wicklung entstehende Hohlräume nicht voll durch die axiale Pressung durch die Druck-Formschale ausgefüllt werden können, einen allseitigen hinreichenden verfestigenden Druck auf sämtliche Wicklungsdrähte gewährleisten zu können, ist nach einer Ausgestaltung der Erfindung vorgesehen, an die Druck-Formschale zusätzlich axiale, in Zwischenräume des Wickelkopfes eintauchende und dessen Wicklung in radialer oder tangentialer Richtung bei dem axialen Vorbringen der Druck-Formschale drückende innere bzw. äußere Druckfinger anzuformen. Ferner sind zur Sicherstellung eines hinreichenden Abstandes zwischen der wickelkopfseitigen Stirnfläche des Ständerblechpaketes und den Wicklungen des Wickelkopfes zweckmäßigerweise an der Begrenzungs-Formschale in den Zwischenraum zwischen dem Wickelkopf und der Stirnfläche des Ständerblechpaketes radial eintauchende Distanz-Vorsprünge angebracht. Zur besonders einfachen Herstellung der erfindungsgemäßen Formschalen-Vorrichtung ist vorgesehen, daß die Führungsvorsprünge als Führungsfinger und die Führungsvertiefungen als Nuten sowie die Druckfinger und Distanz-Vorsprünge jeweils einstückig an die Druck-Formschale bzw. Befestigungs-Formschale bzw. den inneren Formkern an- bzw. eingeformt sind.

Die erfindungsgemäße Formschalen-Vorrichtung läßt sich sowohl zur bleibenden Formung eines vorfixierten, z.B. bandagierten Wickelkopfes als auch eines nur lose gewickelten, später nach dem Backlackverfahren zu verfestigenden Wickelkopfes verwenden; um insbesondere im letzteren Fall eine Distanzhalterung bzw. sichere Erfassung sämtlicher Wickeldrähte durch die axial gegen die Wicklung bewegte Druck-Formschale ohne Beschädigung bzw. Abknickung von einzelnen losen Wicklungsdrähten gewährleisten zu können, ist nach einer weiteren Ausgestaltung der Erfindung vorgesehen, die Führungsfinger bzw. Druckfinger bzw. Distanzvorsprünge an ihren freien Enden an den die Wicklung des Wickelkopfes erfaßenden Flanken im Sinne einer trichterförmigen Wicklungserfassung anzuschrägen.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

Fig. 1 in einem Schnittbild die gesamte Formschalen-Vorrichtung mit einem eingelegten bewickelten Ständerblechpaket;

Fig. 2 bis 6 in einer perspektivischen Explosions-Darstellung die wesentlichen Teile der Formschalen-Vorrichtung;

Fig. 7 in einem Schnittbild die Druck-Formschale mit jeweils einem inneren und einem äußeren Führungsfinger und je einem inneren und einem äußeren Druckfinger;

Fig. 8 eine wickelkopfseitige Draufsicht auf eine komplette Druck-Formschale.

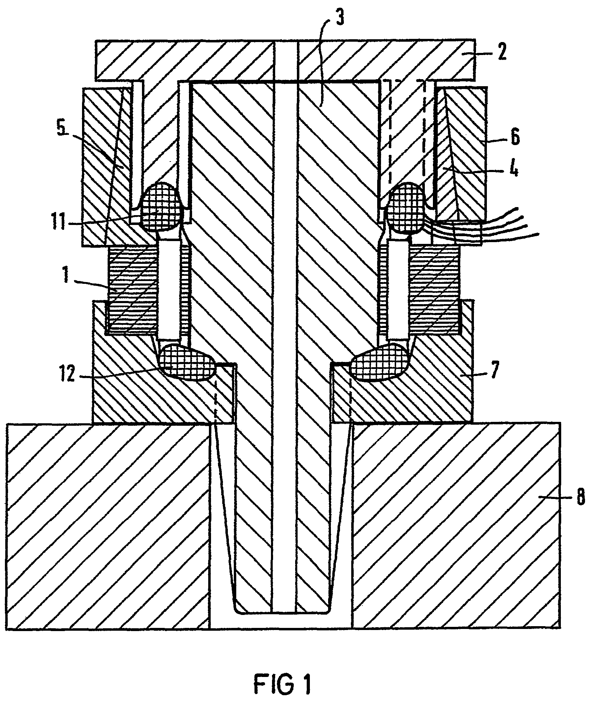

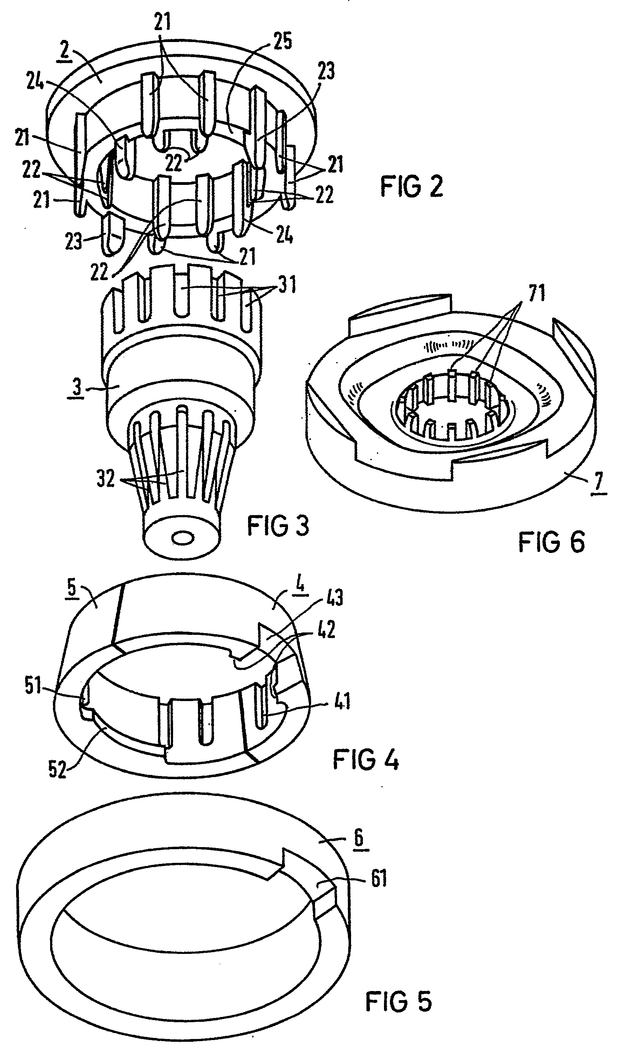

Fig.1 zeigt die auf einer Aufnahmevorrichtung 8 aufgelegte Formschalen-Vorrichtung mit eingebrachtem Ständerblechpaket 1 und dessen formgepreßten Wickelköpfen 11, 12. Die wesentlichen Bauteile der Formschalen-Vorrichtung werden zunächst anhand der perspektivischen Explosions-Darstellung gemäß den Figuren 2 bis 6 beschrieben.

Die Formschalen-Vorrichtung enthält eine den unteren Wickelkopf 12 formende untere Formschale 7 und eine den oberen Wickelkopf 11 formende oberen Druck-Formschale 2. Die Druck-Formschale 2 besteht im wesentlichen aus einem eine gewölbte Wickelkopfstirnkontur 25 aufweisenden Druckteil und an dessen innere und äußere Umfangsfläche einstückig angeformte, axial über die Wickelkopfstirnkontur 25 hinausragende äußere Führungsfinger 21 und innere Führungsfinger 22 sowie äußere Druckfinger 23 und innere Druckfinger 24. Ein innerer Formkern 3 weist an seinem oberen Ende zu den inneren Führungsfingern 22 bzw. den inneren Druckfingern 24 der Druck-Formschale 2 korrespondierende Führungsnuten 31 und seinem unteren Ende zu inneren Führungsfingern 71 der unteren Formschale 7 korrespondierende Führungsnuten auf.

Zwischen dem oberen mit den Führungsnuten 31 und dem unteren mit den Führungsnuten 32 versehenen Teil des Formkerns 3 liegt ein in seinem Außenumfang der Läuferbohrung des Ständerblechpaketes 1 angepaßter Mittelteil.

Eine Begrenzungs-Formschale 4,5 ist in zumindest zwei Teile 4 bzw.5 aufgeteilt, die radial zugeführt und zusammengebracht werden können. Die Begrenzungs-Formschale 4,5 weist an ihrer Innenumfangsflächen zu den äußeren Führungsfingern 21 und Druckfingern 23 der Druck-Formschale 2 korrespondierende Führungsnuten 41 bzw.51 auf. An den unteren Rand der Begrenzungs-Formschale 4,5 sind Distanz-Vorsprünge 42,52 radial einstückig angeformt, die beim Anlegen der beiden Teile der Begrenzungs-Formschale 4,5 gegen den zu formenden Wickelkopf 11 einen hinreichenden Abstand zwischen der Stirnseite des Ständerblechpaketes 1 und den darüberliegenden Wicklungsdrähten des zu formenden Wicklungskopfes 11 gewährleisten. In die eine Hälfte der Begrenzungs-Formschale 4,5 ist zusätzlich eine Öffnung 43 für ein am Ständerblechpaket zu halterndes Universalterminal vorgesehen, mittels dessen in vorteilhafter Weise die Spulenwicklungsenden z.B.mit am Universalterminal vorkonfektioniertem Thermowächter und mit Klemmen für äußere Speiseleitungen vorfixiert bzw. kontaktiert werden können.

Fig.5 zeigt einen im vorliegenden Ausführungsbeispiel zum Zusammenhalt der zweigeteilten Begrenzungs-Formschale 4,5 vorgesehenen außen überstülpbaren Druckring 6, der ebenfalls eine der Öffnung 43 der Begrenzungs-Formschale 4,5 entsprechende Öffnung 61 für das am Ständerblechpaket 1 zu halternde Universalterminal aufweist. Anstelle der axial überstülpbaren Druckringe können auch z.B. radial zuführbare Druckbacken vorgesehen werden.

Fig.6 schließlich zeigt die untere Formschale 6, die innen ebenfalls Führungsfinger 71 aufweist, mittels derer die Wicklungsdrähte des Wickelkopfes 12 trichterförmig erfaßt und der Wickelkopfstirnkontur zugeführt werden, die als nicht rotationssymmetrische, ansonsten geschlossene Formfläche in die untere Formschale 7 eingearbeitet ist.

Zur Formpressung der Wickelköpfe wird das bewickelte Ständerblechpaket 1 mit den vorgeformten oder nur lose gewickelten Wickelköpfen 11,12 gemäß Fig.1 mit eingestecktem Formkern 3 in die untere Formschale 7 eingelegt. Dabei werden durch die Führungsfinger 71 die Drähte des unteren Wickelkopfes 12 ohne Gefahr einer Beschädigung bzw. Abknickung in ihrer Gesamtheit der im übrigen als geschlossene Kontur in die untere Formschale 7 eingearbeiteten Wickelkopfform zugeführt. Anschließend werden zur Bildung des oberen Wickelkopfes 11, auf dessen Bildung sich die Merkmale der vorliegenden Erfindung im wesentlichen beziehen, die beiden Teile der äußeren Begrenzungs-Formschale 4,5 radial zugeführt. Dabei untergreifen die radialen Distanz-Vorsprünge 42,52 die untere Seite des Wickelkopfes 11 und gewährleisten einen hinreichenden Abstand zwischen der Stirnseite des Ständerblechpaketes 1 und den gegenüberliegenden Teilen des Wickelkopfes 11. Durch die äußere Begrenzungs-Formschale 4,5 einerseits und den inneren Formkern 3 ist nunmehr bis auf die obere axiale Öffnung, in die anschließend die Druck-Formschale 2 eingeführt wird, die zu erstrebende Außenkontur des Wickelkopfes 11 festgelegt.

Beim axialen Einschieben der Druck-Formschale 2 gleiten die Führungsfinger 21,22 in den korrespondierenden Führungsnuten 31 des inneren Formkerns 3. Da in vorteilhafter Weise die Führungsfinger 21,22 einerseits außerhalb der Wickelkopfstirnkontur 25 der Druck-Formschale 2 angeordnet sind und andererseits radial in die entsprechenden Führungsnuten 31 des Formkerns 3 eintauchen, geht einerseits kein Wickelnutzraum verloren und können andererseits die Führungsfinger 21,22 hinreichend prozeßsicher ausgebildet und an ihren freien Enden im Sinne einer trichterförmigen Erfassung der zur Gegenlage kommenden Wickelkopfteile mit angeschrägten Flanken versehen werden.

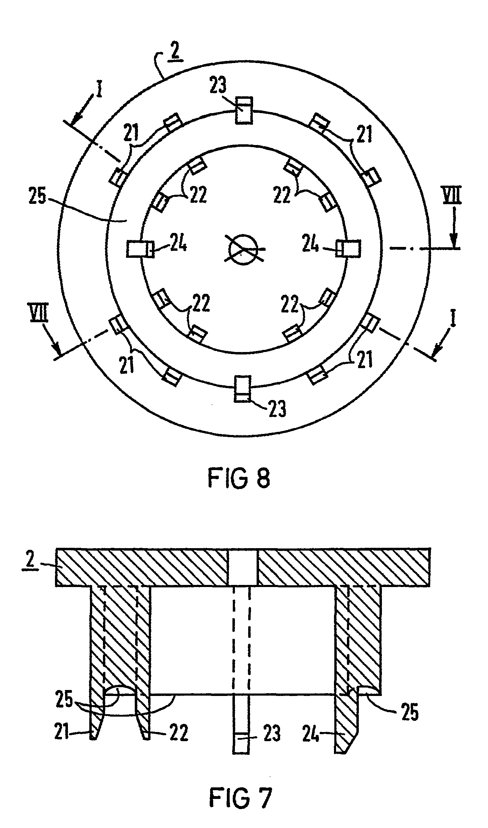

Bei dem axialen Eindrücken der Druck-Formschale 2 werden in vorteilhafter Weise die Wicklungsdrähte in noch vorhandene Zwischenräume ein- und gegen die Begrenzung des inneren Formkerns bzw. der äußeren Begrenzungs-Formschale unter Erreichung einer plastischen Verformung gegengedrückt. Um auch z.B. bei mehrlagigen, mit versetzten Spulengruppen versehenen Wickelköpfen in den Zwischenräumen benachbart gegenüberliegender Spulengruppe einen allseitigen Druck auf sämtliche Wicklungsdrähte sicherstellen zu können, sind nach einer Ausgestaltung der Erfindung an die Druck-Formschale 2 zusätzlich innere bzw. äußere Druckfinger 23 bzw.24 angeformt, die - wie insbes. aus Fig.7,8 ersichtlich - im Unterschied zu den Führungsfinger 21,22 auch teilweise in den Bereich der Wickelkopfstirnkontur 25 der Druck-Formschale 2 hineinreichen.

Ebenso wie die Führungsfinger 21,22 sind auch die Druckfinger 23,24 in vorteilhafter Weise an ihren freien Enden mit im Sinne einer trichterförmigen allmählichen Erfassung der gegenliegenden Wicklungsdrähte angeschrägten Flanken versehen. Zur deutlicheren Darstellung dieser wesentlichen Merkmale sind in Fig.7 die bei dem Schnittverlauf VII-VII gemäß Fig.8 lediglich in verzerrter Ansicht erscheinenden Führungsfinger nicht dargestellt. Die Verteilung der äußeren Druckfinger 23 bzw. der inneren Druckfinger 24 in Fig.8 entspricht der Formung einer zweipoligen, in zwei Wicklungslagen angeordneten Einphasenwicklung mit jeweils einer Haupt- und Hilfsphase und somit insgesamt vier Spulengruppen, wobei die Zwischenräume zwischen zwei benachbarten Spulengruppen von der oberen zu der unteren Wicklungslage wechselnd, jeweils um 90° versetzt am Umfang verteilt angeordnet sind.

Die besonders einfach herstellbare und leicht bedienbare erfindungsgemäße Vorrichtung zur Formpressung eines bereits vorfixierten oder nur lose gewickelten Wicklungskopfes gewährleistet eine beschädigungsfreie Erfassung sämtlicher Wicklungsdrähte und einen solchen Verformungsdruck, daß sämtliche Wicklungsdrähte nach der Formpressung und dem anschließenden gegebenenfalls vorgesehenen Backlackverfestigen die gewünschte Wickelkopfstirnkontur ohne Gefahr eines Rückfederns oder Lösens aus ihrem Verband fixiert sind.

## Patentansprüche

1. Vorrichtung zur Formpressung eines Wickelkopfes (11), insbesondere eines unbandagierten, nach dem Backlackverfahren zu verfestigenden Wickelkopfes, mit einer gegen einen Wickelkopf drückbaren Formschalen-Vorrichtung, **gekennzeichnet** durch folgende Merkmale:

a) Die Formschalenvorrichtung enthält einen die Wickellopfform nach radial innen begrenzenden, inneren Formkern (3), eine die Wickelkopfform nach radial außen begrenzende, in Umfangsrichtung zumindest zweigeteilte, radial zugeführte äußere Begrenzungs-Formschale (4,5) sowie eine axial gegen den Wickelkopf (11) zuführbare Druck-Formschale (2) mit einer Wickelkopfstirnkontur (25);

b) an die Druck-Formschale (2) sind an deren äußerer und innerer Umfangsfläche außerhalb der Wickelkopfstirnkontur (25) axial in Richtung des zu formenden Wickelkopfes (11) vorstehende, den Wickelkopf (11) an seinen Außenseitenflächen und seinen Innenseitenflächen übergreifende äußere bzw. innere Führungsvorsprünge (Führungsfinger 21 bzw.22) angebracht;

c) in die äußere Begrenzungs-Formschale (4,5) sowie in den inneren Formkern (3) sind zu den inneren bzw. äußeren Führungsvorsprüngen korrespondierende innere bzw. äußere Führungsvertiefungen eingebracht, in welche die inneren bzw. äußeren Führungsvorsprünge eintauchen.

2. Vorrichtung nach Anspruch 1, **gekennzeichnet** durch das Merkmal:

d) Die äußeren bzw. inneren Führungsvorsprünge bestehen aus über den äußeren bzw. inneren Umfang der Druck-Formschale (2) verteilt angeordnete äußere bzw. innere Führungsfinger (21 bzw.22) und die Führungsvertiefungen aus korrespondierenden äußeren bzw. inneren Führungsnuten (31 bzw.41; 51) in dem inneren Formkern (3) bzw. in der äußeren Begrenzungs-Formschale (4,5).

3. Vorrichtung nach Anspruch 1 und/oder 2, **gekennzeichnet** durch das Merkmal:

e) An der Druck-Formschale (2) sind axiale, in Zwischenräume des Wickelkopfes (11) eintauchende und dessen Wicklung in radialer oder tangentialer Richtung drückende äußere bzw. innere Druckfinger (23 bzw.24) angebracht.

4. Vorrichtung nach zumindest einem der Ansprüche 1-3, **gekennzeichnet** durch das Merkmal:

f) An der Begrenzungs-Formschale (4,5) sind in den Zwischenraum zwischen dem Wickelkopf (11) und der Stirnfläche des Ständerblechpaketes (1) radial eintauchende Distanz-Vorsprünge (42,52) angebracht.

5. Vorrichtung nach zumindest einem der Ansprüche 1-4, **gekennzeichnet** durch das Merkmal:

g) Die Führungsfinger (21,22) bzw. Druckfinger (23,24) sind einstückig an die Druck-Formschale (2) angeformt und/oder die Führungsnuten (31 bzw.41,51) einstückig in den inneren Formkern (3) bzw. in die äußere Befestigungs-Formschale (4,5) eingeformt.

6. Vorrichtung nach zumindest einem der Ansprüche 1-5, **gekennzeichnet** durch das Merkmal:

h) Die Distanz-Vorsprünge (42,52) sind einstückig an die Befestigungs-Formschale (4,5) angeformt.

7. Vorrichtung nach zumindest einem der Ansprüche 1-6, **gekennzeichnet** durch das Merkmal:

i) Die Führungsfinger (21,22) bzw. Druckfinger (23,24) bzw. Distanz-Vorsprünge (42,52) sind an ihren freien Enden mit der Wicklung des Wickelkopfes (11) im Sinne einer trichterförmigen Erfassung angeschrägten Flanken versehen.

## Claims

1. Device for compression-moulding a coil winding head (11), more particularly an unbandaged coil winding head which is to be consolidated by the baking-lacquering method, having a mould shell device which may be pressed against a coil winding head, characterised by the following features:

a) the mould shell device comprises an inner mould core (3), which defines the coil winding head mould radially inwardly, an outer defining mould shell (4, 5), which defines the coil winding head mould radially outwardly, which is divided into at least two parts in the peripheral direction and which is inserted radially, and also a pressure mould shell (2), which may be inserted axially towards the coil winding head (11), with a coil winding head contouring face (25);

b) mounted on the pressure mould shell (2) there are outer or inner guide projections (guide fingers 21 or 22) which, on the outer and inner peripheral surface of said pressure mould shell (2) outside the coil winding head contouring face (25), project axially in the direction of the coil winding head (11) to be shaped and which overlap the coil winding head (11) on its outer side faces and its inner side faces;

c) inner or outer guide recesses, which correspond to the inner or outer guide projections and into which the inner or outer guide projections extend, are introduced into the outer defining mould shell (4, 5) and also into the inner mould core (3).

2. Device according to claim 1, characterised by the feature:

d) the outer or inner guide projections consist of outer or inner guide fingers (21 or 22) which are arranged distributed over the outer or inner periphery of the pressure mould shell (2) and the guide recesses consist of corresponding outer or inner guide grooves (31 or 41; 51) in the inner mould core (3) or in the outer defining mould shell (4, 5).

3. Device according to claim 1 and/or 2, characterised by the feature:

e) mounted on the pressure mould shell (2) there are axial, outer or inner pressure fingers (23 or 24) which extend into interspaces of the coil winding head (11) and press the latter's winding in a radial or tangential direction.

4. Device according to at least one of the claims 1–3, characterised by the feature:

f) mounted on the defining mould shell (4, 5) there are spacing projections (42, 52) which radially extend into the interspace between the coil winding head (11) and the front of the stator lamination bundle (1).

5. Device according to at least one of the claims 1–4, characterised by the feature:

g) the guide fingers (21, 22) or pressure fingers (23, 24) are preformed in one piece on the pressure mould shell (2) and/or the guide grooves (31 or 41, 51) are moulded in one piece into the inner mould core (3) or into the outer securing mould shell (4, 5).

6. Device according to at least one of the claims 1–5, characterised by the feature:

h) the spacing projections (42, 52) are preformed in one piece on the securing mould shell (4, 5).

7. Device according to at least one of the claims 1–6, characterised by the feature:

i) the guide fingers (21, 22) or pressure fingers (23, 24) or spacing projections (42, 52) are provided at their free ends with chamfered flanks for the winding of the coil winding head (11) for the purposes of a funnel-shaped gripping means.

**Revendications**

1. Dispositif pour mouler par compression une tête de bobine (11), notamment une tête de bobine non bandée, devant être consolidée conformément au procédé Backlack, comportant un dispositif à coquilles de moulage, pouvant être serré contre une tête de bobine, remarquable par les caractéristiques suivantes:

a) le dispositif à coquilles de moulage contient un noyau intérieur de moulage (3), qui limite radialement vers l'intérieur la forme de la tête de moulage, une coquille extérieure de moulage de délimitation (4, 5), qui réalise une délimitation radialement vers l'extérieur, est subdivisée au moins en deux éléments dans la direction circonférentielle et est approchée radialement, ainsi qu'une coquille de moulage sous pression (2), qui peut être approchée axialement de la tête de bobine (11) et comporte un contour frontal (25) de la tête de bobine;

b) sur la coquille de moulage sous pression (2) se trouvent disposées des parties saillantes extérieures et intérieures (doigts de guidage 21 et 22), qui font saillie axialement, en direction de la tête de bobine (11) devant être moulée, sur les surfaces périphériques extérieure ou intérieure de la coquille de moulage et à l'extérieur du contour frontal (25) de la tête de bobine et s'engagent pardessus la tête de bobine (11) au niveau de ses surfaces latérales extérieures et de ses surfaces latérales intérieures;

c) dans la coquille extérieure de moulage de limitation (4, 5) ainsi que dans le noyau intérieur de moulage (3) se trouvent ménagés des renfoncements intérieurs ou extérieurs de guidage, qui correspondent aux parties saillantes intérieures ou intérieures de guidage et dans lesquelles s'engagent ces parties saillantes.

2. Dispositif suivant la revendication 1, remarquable par la caractéristique suivante:

d) les parties saillantes extérieures et intérieures sont constituées par des doigts de guidage extérieurs et intérieurs (21 et 22), disposés en étant répartis sur le pourtour extérieur et le pourtour intérieur de la coquille de moulage sous pression (2) et les renfoncements de guidage sont constitués par des rainures extérieures et intérieures correspondantes de guidage (31 ou 41; 51) ménagées dans le noyau intérieur de moulage (3) et dans la coque extérieure de moulage de limitation (4, 5).

3. Dispositif suivant la revendication 1 et/ou 2, remarquable par la caractéristique suivante :

e) sur la coque de moulage sous pression (2) se trouvent disposés des doigts de compression axiaux extérieurs et intérieurs (23 et 24), qui s'engagent dans des espaces intercalaires de la tête de bobine (11) et repoussent son enroulement dans une direction radiale ou tangentielle.

4. Dispositif selon au moins l'une des revendications 1–3, remarquable par la caractéristique suivante:

f) sur la coquille de moulage de limitation (4, 5) se trouvent disposées des parties saillantes d'entretoisement (42, 52), qui pénètrent radialement dans l'espace intercalaire présent entre la tête de bobine (11) et la surface frontale du paquet de tôles statoriques (1).

5. Dispositif selon au moins l'une des revendications 1–4, remarquable par les caractéristiques suivantes :

g) les doigts de guidage (21, 22) et les doigts de compression (23, 24) sont façonnés d'un seul tenant sur la coquille de moulage sous pression (2) et/ou les rainures de guidage (31 ou 41, 51) sont façonnés d'un seul tenant dans le noyau intérieur de moulage (3) ou dans la coquille extérieure de moulage de consolidation (4, 5).

6. Dispositif selon au moins l'une des revendications 1–5, remarquable par la caractéristique suivante:

h) les parties saillantes d'entretoisement (42, 52) sont façonnées d'un seul tenant sur la coquille de moulage de consolidation (4, 5).

7. Dispositif selon au moins l'une des revendications 1–6, remarquable par la caractéristique suivante:

i) les doigts de guidage (21, 22) et les doigts de compression (23, 24) et les parties saillantes d'entretoisement (42, 52) comportent, sur leurs extrémités libres portant l'enroulement de la tête de bobine (11), des flancs biseautés servant à former une monture en forme d'entonnoir.

FIG 1

FIG 2

FIG 3

FIG 6

FIG 4

FIG 5

FIG 8

FIG 7